# EUROPEAN PATENT SPECIFICATION

(11) **EP 2 841 934 B1**
(45) Date of publication and mention of the grant of the patent: **03.04.2019**
(21) Application number: 13781756.5
(22) Date of filing: 19.04.2013
(51) Int. Cl.: G01N 27/62

(54) **METHOD AND STRUCTURE FOR CHEMICAL ANALYSIS**
VERFAHREN UND STRUKTUR ZUR CHEMISCHEN ANALYSE
PROCÉDÉ ET STRUCTURE D'ANALYSE CHIMIQUE

(30) Priority: 23.04.2012 FI 20125440
(43) Date of publication of application: 04.03.2015
(73) Proprietor: Environics Oy, 50130 Mikkeli (FI)
(72) Inventor: ANTTALAINEN, Osmo, 50600 Mikkeli (FI)
(74) Representative: Helke, Kimmo Kalervo
(86) International application number: PCT/FI2013/050440
(87) International publication number: WO 2013/160543

(56) References cited:
- WO-A1-2006/060807
- WO-A2-02/071053
- US-A1- 2003 150 987
- US-A1- 2006 054 804
- US-A1- 2006 097 156
- US-A1- 2007 023 647

## Description

The present invention relates to a method for chemical analysis, in which
- a gas flow is ionized in order to form an ionized gas flow that is brought to a flow channel,
- the ionized gas flow is led to a planar filter structure fitted to the flow channel,
- the ionized gas flow is filtered using the DMS/FAIMS method, in order to remove at least some of the ions from the ionized gas flow,
a mainly non-ionized gas flow, which is on at least one side of the ionized gas flow, is led to the filtering area together with the ionized gas flow. The invention also relates to a corresponding structure.

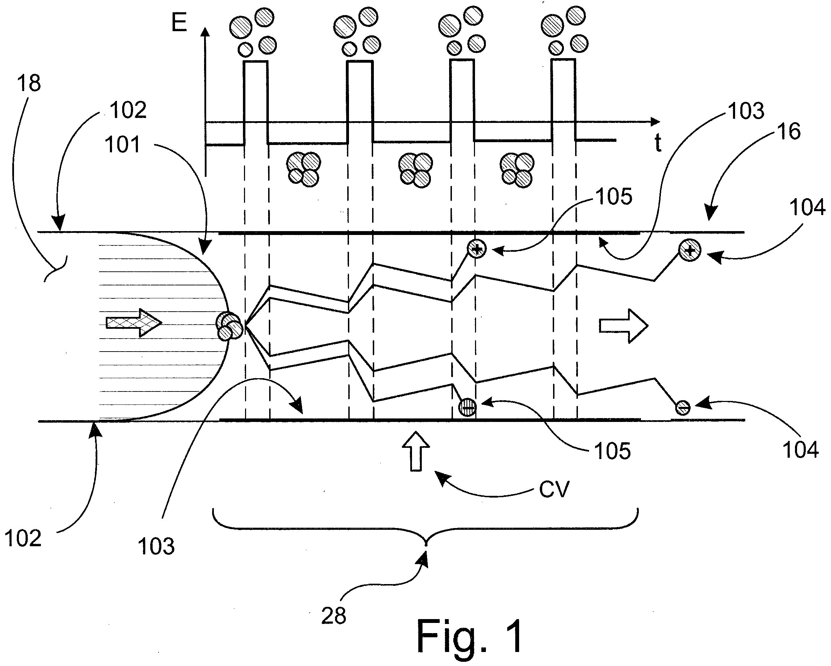

Figure 1 shows an idealized diagram of the principle of the known FAIMS (Field Asymmetric-waveform Ion-Mobility Spectrometry) aka DMS (Differential Mobility Spectrometry) ion-filtering technique. It is used, for example, to separate different types of ions in a gaseous form. The technique is based on using a high-frequency variable electric field in the ion-filter structure. The filter structure consists of, for example, a substrate 102 arranged to form a flow channel 18 and planar filter electrodes 103 arranged on it facing each other.

The structure permits the passage of only ions 104 that behave in a specific manner in an electric field and filters other ions 105 by neutralizing them electrically. The neutralization removes the ions, because the terminal velocity received by the ions in the electric field depends on the field's strength. In an asymmetrical field, the ions oscillate in the filter at an asymmetrical velocity, which causes a net transfer of ions towards the electrodes in an advantageous direction relative to the field. The electrical-field-dependence of the ions is very small and this difference can be compensated by increasing the DC component CV to the frequency-changing field, which cancels a specific type of field dependence.

By arranging the ion-transporting gas flow between two parallel electrodes 103, and setting an electrical field of the type referred to above between these electrodes, some of the ions 105 can be removed through the structure thus obtained and the desired passband can be selected with the aid of the aforementioned compensation voltage. By using an electric field after the filter in the flow direction to collect the ions 104 that have passed through the filter, it is possible to determine the quality and/or number (reference number 16 in Figures 1 and 6 - 8) of the ions 104 that have passed through.

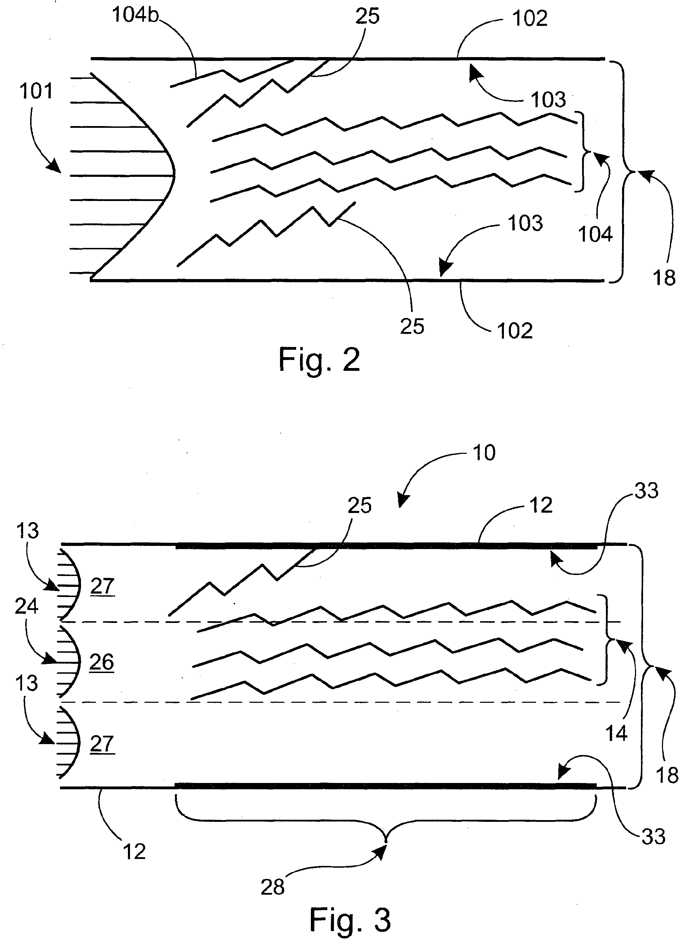

For its part, Figure 2 shows a situation corresponding more to reality in the case of the behaviour of the ions in the aforementioned filtering technique. The flow profile 101 of the gas flow shows that the ionized gas flow to be analysed covers the entire cross-section area of the flow channel 18. As the ions are distributed evenly over the flow channel 18, the filter electrodes 103 will inevitably also collect ions 104b that it is particularly desired to pass through the filter. These ions 104b, which are too close to the edge of the flow channel 18, are neutralized and thus out of the flow that has passed through the filter. This reduces the signal obtained from the system comprising the filter, and also the signal-noise ratio.

Containment gas to achieve ion concentration toward the center of the flow path in FAIMS is known from WO 2006/060807.

The present invention is intended to create a method and structure, which will improve the signal obtained from chemical analysis. The characteristic features of the method according to the invention are stated in Claim 1 and those of the structure in Claim 6.

In the invention, a parallel mainly non-ionic gas flow, which is on at least one side of the ionized gas flow, is led along with the ionized gas flow to the filter structure. The use of the solution prevents, or at least reduces, the filtering of ions that it is wished to pass through the filtering. In addition to the measurement signal obtained, the signal-noise ratio of the measurement signal in chemical analysis is also improved.

According to one embodiment, the ionized gas flow can be led to the planar filter structure between a mainly non-ionized gas flow. In this case, the non-ionized gas flow is formed on both sides of the ionized gas flow, so that the flows create a kind of sandwich structure. Ion filtering implemented using the DMS/FAIMS principle can thus be operated in the so-called second-order manner.

According to one embodiment, the ionized gas flow can also be flattened by the mainly non-ionized gas flow before both are led to the planar filter structure. In this way, the performance of the filtering can be further improved.

By means of the invention, it is possible to solve, for example, a problem relating to planar DMS/FAIMS filtering, in which some of the ions in the air or gas flowing in the flow channel of the filter structure are so close to the edge of the flow channel that they end up on the DMS/FAIMS collection electrodes, even though they should not. By using the shield flow according to the invention, for example on both sides of the ion flow in which one is interested, as a kind of sandwich structure, only the ions to be filtered end up on the collection electrodes and are neutralized, whereas the desired ions passing through the filter remain advantageously in the middle of the flow channel. Thus, stated generally, the invention is the use of a shield flow as a factor preserving the signal, i.e. improving the signal-noise ratio. The actual measurement signal can be measured only outside the DMS filter and after it, in one way or another. The other characteristic features of the invention and other advantages achieved with the invention, are examined in more extensively in the description portion.

In the following, the invention, which is not restricted to the embodiments disclosed hereinafter, is described in greater detail with reference to the accompanying figures, in which
- Figure 1: shows a schematic diagram of the principle of DMS/FAIMS filtering, in an ideal situation,
- Figure 2: shows a schematic diagram of drawbacks in the operation of a filter according to the prior art, and the behaviour of ions in it,
- Figure 3: shows a rough schematic diagram of the operating principle of the filtering structure according to the invention, and the behaviour of ions in it,
- Figure 4: shows schematically one construction of the filter
- Figure 5: shows schematically a second construction of the filter,
- Figures 6 and 7: show a few ways of bringing the flows to the filter structure,
- Figure 8: shows examples of the dimensions of one filter structure, and
- Figures 9a and 9b: show yet a third way to bring the flows to the filter structure.

In the following, the method according to the invention for chemical analysis is described with reference to Figures 3 - 7. The term chemical analysis can refer to, for example, the qualitative and/or quantitative detection from a gas flow of substances or similar structural units in the gas flow. An aerosol, in which particles are suspended in a gas, can also be considered to be a gas flow within the context of the invention.

Figure 3 shows schematically on a very rough level an example of the solution consistent with the invention and the behaviour of the ions in a filter structure 10. The so-called second-order solution is based on the idea of taking a planar ionized gas flow 24 to a planar filtering area 28 at one edge of or in the middle of a flow channel 18. In other words, the ionized gas flow 24, which is the object of the filtering, is narrower in relation to the height of the whole flow channel 18.

A description of the method can start, for example, from the ionization of the gas flow to be analysed. Ionization can take place, for example, outside the flow channel 18, in which case the ions are brought from the actual source to the flow channel 18 along with the gas flow. Ionization of the gas flow can be performed, for example, in some manner of the prior art that is, as such known, or is still under development. Some nonlimiting examples are a radioactive ionizer, a corona charger, the electrospray technique, or some other well-known method. The distance from the ionizer (not shown) to the entry opening of the flow-channel structure 18 is set to be relatively short, to reduce losses.

Next, the ionized gas flow 24 is led to the flow channel 18 forming the filter structure 10. A parallel, mainly non-ionized gas flow 13 is formed on at least one side of the ionized gas flow 24 inside the actual flow channel 18. In any event, the parallel, mainly non-ionized gas flow 13 is formed before the ionized gas flow 24 is taken to filtering in the filtering area 28. Thus, in the invention, the gas flow 24 to be analysed is formed from a part flow that is narrower relative to the height of the flow channel 18. In this way, a kind of 'shield flow' 13 is created on at least one side of the ionized gas flow 24, in the flow direction between the gas flow 24 and the wall 12 of the flow channel 18. The use of the shield flow 13 makes it possible, for example, to reduce the neutralization of the edge ions 25 of the ion flow 24 that is intended for later analysis.

Figure 3 shows the flow zones 26, 27 of the gas flows 13, 24 and their flow profiles. Now the neutral, i.e. mainly non-ionized flows 13 are on both sides relative to the ionized flow 24. Thus the flows 13, 24 form a sandwich structure. Each flow 13, 24 can be separated from the other by a structure (not shown), which divides the flow channel 18 planarly into parts, before the filtering area 28.

Next, the ionized gas flow 24 is led to the filtering area 28 arranged in the flow channel 18, in which the desired ions are filter out of it. The parallel, mainly non-ionized gas flow 13, which is on at least one side of the ionized gas flow 24, is led to the filtering area 28 along with the ionized gas flow 24. In this case, the ionized gas flow 24 is led to the filtering area 28 in between the mainly non-ionized gas flow 13, which is thus on both sides of the ionized gas flow 24.

Next, the ionized gas flow 24 is filtered using the DMS/FAIMS method to remove at least some of the ions 105 from the gas flow 24. As such, in terms of the electric fields used in it, the implementation of the DMS/FAIMS filtering will be obvious to one skilled in the art, and for this reason will not be dealt with further in this connection. In the filtering, the ions 25 intended to be filtered out of the ionized gas flow 24 arranged in the middle move in the filtering area 28 through the passage zones 27 formed by the shield flows 13 at the edges of the flow channel 18 and are neutralized, because their field dependence causes them to move towards the filter electrodes 33. For its part, the ions 14 of the gas flow 24 passing the filtering have not time to move to the filter electrodes 33. In the middle of the flow channel 18 there is an oscillation zone 26 for the passing ions 14, which do not end up on the filtering area's 28 electrodes 33 in the filtering area 28.

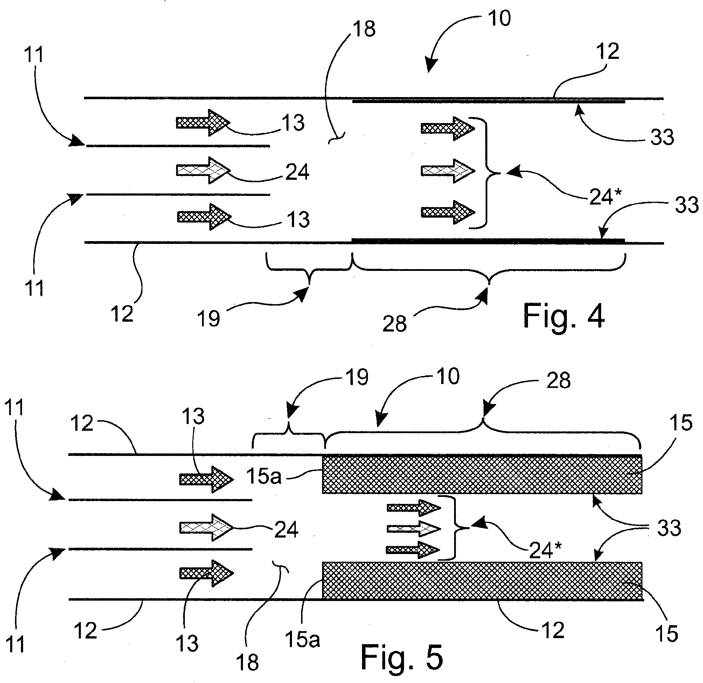

Figures 4 - 7 show, in a roughly simplified form, some schematic structural solutions for implementing a filter structure 10 for chemical analysis, as cross-sections of the flow channel 18 in its longitudinal, i.e. flow direction. The structure 10 includes a flow-channel arrangement 18 for the ionized gas flow 24. The gas flow 24 is arranged to be filtered in the structure 10 using the DMS/FAIMS method in a planar filtering area 28 fitted to the flow channel 18. The filtering area 28 includes two DMS/FAIMS electrodes 33, which can be controlled in a manner that is, as such, known, using known control means (not shown). The structure 10 includes means 11 for creating a mainly non-ionized gas flow 13 on at least one side of the ionized gas flow 24.

In the embodiment shown in Figure 4, the means 11 include a structure 11 dividing the gas flow 18 into parts before the filtering area 28. By means of the structure 11, several narrower flow channels, whose height is only part of the height of the entire flow channel 18, are formed in the flow channel 18. By means of the structure 11, the ionized gas flow 24 intended to be analysed can be arranged in the middle of the flow channel 18, with the mainly non-ionized, i.e. neutral gas flows 13 on both sides relative to it. By means of the channel structure 11, the neutral, i.e. shield-flows 13 are kept separate from the ionized flow 24 in the middle.

In the embodiments of Figures 4 - 7, the structure 10 includes two longitudinal walls 11 in the direction of the flow channel 18 fitted to the flow channel 18. The walls 11 too are planar.

The mainly non-ionized gas flow 13 and the ionized gas flow 24 are combined with each other before they are led to the filtering area 28. For this purpose a small gap 19 is arranged to remain that is free of the dividing structures 11, between the structure 11 dividing the flow channel 18 into parts and the filtering area 28. Of course, the non-ionized gas flow 13 and the ionized gas flow 24 can be combined with each other already when they are brought to the flow channel 18, but they may then mix with each other detrimentally before the filtering area 28 to such an extent as to impair the result of the filtering.

Figures 5 - 7 show a second embodiment of the filter structure 10. In it the mainly non-ionized gas flow 13 is used to flatten the ionized gas flow 24 on both sides, when they are led to the filtering area 28. One way to implement this is to arrange a throttle structure 15 in the filtering area 28 in order to flatten the ionized gas flow 24 using the mainly non-ionized gas flow 13. The structure 15 is now implemented by means of a material layer fitted over the entire length of the filtering area 28, which reduces the height of the flow channel 18 in the filtering area 28. The structure 15 is in a substrate 12 on opposite edges of the flow channel 18. For their part, the DMS/FAIMS electrodes 33 are now on the surfaces of the material layer 15 opposite each other.

The structure-free gap 19 remaining between the divider structure 11 and the filtering area 28 now permits the side flows 13 to turn and the combined flow 24* will fit to go to the filtering area 28. The flattening of the effective flow 24 in the middle, achieved by the turning of the side flows 13, improves performance. The entry-side edge 15a of the throttle structure 15 is vertical. Optimally, however, these shapes can be slightly curved or bevelled, so that the sharp corners will not cause problems.

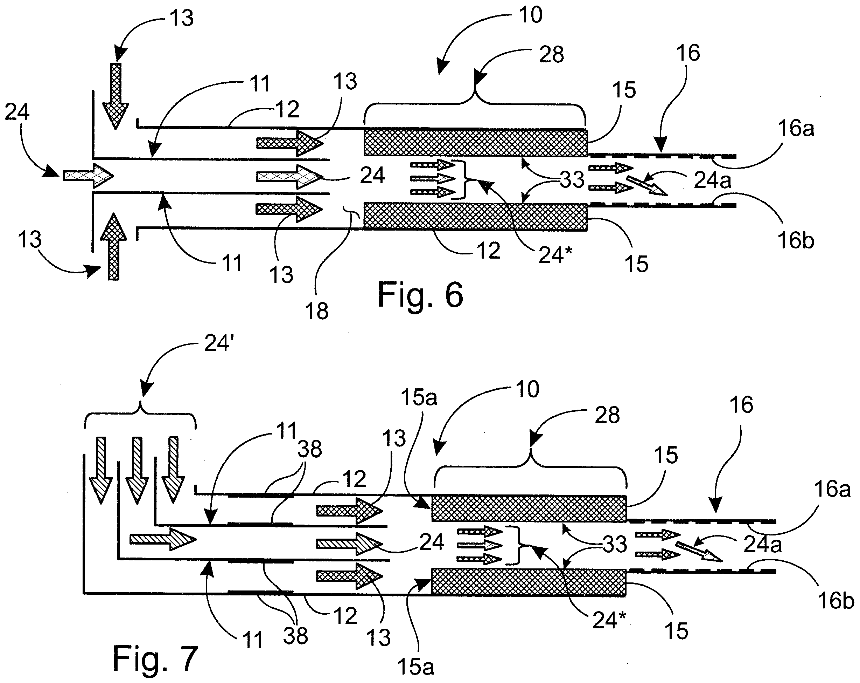

Figures 6 and 7 show schematic examples of how the flows 13, 24 can be brought to the filter structure 10 and thus also to the flow channel 18. In addition, the figure shows schematically the analyser 16 that comes after the filter structure 10. The gas flows 13, 24 can be brought to the structure 10 from different sides of it, or even from the same side, depending on the implementation.

In the structure of Figure 6, the mainly non-ionized gas flow 13 is formed by bringing a neutral shield-gas flow 13 to the flow channel 18. If the filter structure 10 is examined in its typical operating attitude, in which the electrodes 33 are on the upper and lower surface of the flow channel 18, the ionised flow 24 is brought to the filter structure 10 from its end, without no change in direction. The neutral flows 13 are brought to the filter structure 10 from above it and below it. The embodiment of Figure 7 shows an example of the embodiment, in which a narrow ion flow 24 is created by neutralizing the side flows 13. Now the gas flows to be brought to the filter structure 10 can all be the same ionized gas flow 24' brought from the ionizer and, for example, led from above to the filter structure 10 in its typical operating attitude. In this case, the mainly non-ionized gas flow 13 is formed by neutralizing part of the gas flow 24' only once it is in the flow channel 18. To neutralize the side flows 13, the structure 11 dividing the flow channel 18 into parts is fitted with electrode means 38 by means of which are arranged to neutralize part of the ionized gas flow 24' brought to the flow channel 18, to create mainly non-ionized gas flows 13. This embodiment has the advantage of simple implementation. When creating an ionized flow 24 and a neutral flow 13 with the aid of the structure 10, there is no need at all for 'clean' flows as shields and for bringing to the structure 10.

In both structures, the flows 24, 13 after the divider structure 11 arranged in the flow channel 18 are combined to form a single flow 24', so that the ionization flow 24 remains as its own narrow band relative to the cross-section of the channel 18, for example in the centre of the channel 18. A flow arrangement like that of the second order can be implemented inside the DMS/FAIMS filter 10, when neutralization of the passage mobility will be reduced and the signal-noise ratio will improve. In a structure according to the invention like that of the second order, the flows can be arranged as shown in the figures and in such a way as to preserve the ionization zone 26, unless it is separately disturbed.

Figures 6 and 7 show schematically the flight 24a of ions in an analyser 16 in an electric field set for measurement. This does not affect the flow profile, as the concentration is non-existent relative to the mass flow. A measurement field is created, or measurement is performed, using electrodes 16a and these have a counter electrode 16b. Using the electrodes, for example a mobility analysis of the ions is made, i.e. different mobilities are directed to different electrodes by using either a permanent electric field, or by varying the magnitude of the electric field in such a way as to change the so-called boundary mobility coming to the electrode.

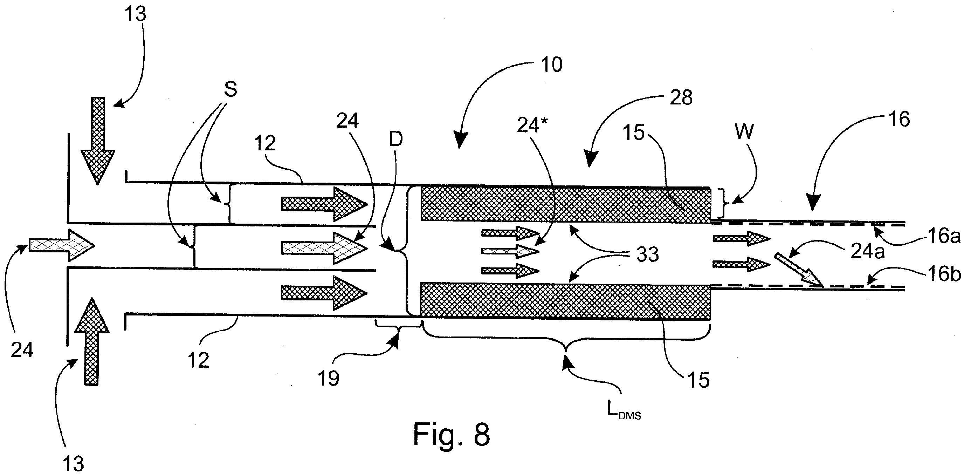

Figure 8 shows a further few examples of the dimensions, or dimension ratios of the structure 10. The length L_{DMS} of the DMS electrodes 33, i.e. of the area 28, in the flow direction, i.e. the longitudinal direction of the structure 10, can be, for example 10 - 80 mm. The height D of the flow channel 18 can be, for example, 1 - 10 mm. The thickness W of the throttle structures 15 of the whole height H of the flow channel 18 can be, for example, 25 - 75%. The height S of the sub-flow channels formed by the divider structures 11 can be, for example, 0.1 - 2 mm. The ratio between the height D of the flow channel 18 and the sub-channels can be D > 3S, but, however, preferably D < 10S.

The thickness W of the throttle structures 15 in the area of the DMS/FAIMS electrodes 33 can be 50 - 90% of the height S of the side-flow channels. The throttle plates 15 narrow the filter area 28 on the entry side, which flattens the combined flow 24* after the divider structures 11.

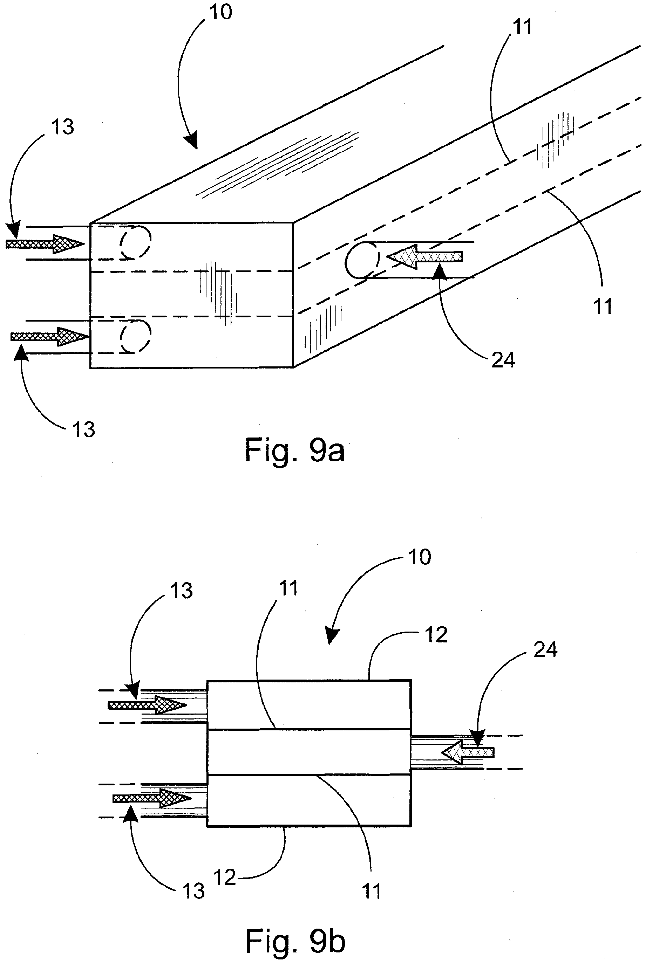

Figures 9a and 9b show yet another, outwith the scope of the invention, of bringing the flows 13, 24 to the filter structure 10. Figure 9b shows a cross-section of the filter structure 10 of Figure 9a, seen from the end, from the entry point of the gas flows 13, 24 to the structure 10. In this embodiment, the flows 13, 24 are brought to the filter structure 10 from the side, if the filter structure 10 is examined in its typical operating attitude, when the electrodes 33 are in the upper and lower walls 12 of the flow channel 18. The particular advantage of this embodiment is in the manufacture of the filter structure 10, especially when the parts of the piece 10 are made using injection moulding, or some other method that permits the entire set of channels to be made from a single part. When the gas flows 13, 24 are brought to the filter structure 10 in this way, the gas-flow connections can be easily arranged in the filter structure 10.

The ionized gas flow 24 is brought from one side of the filter structure 10 to the sub-channel delimited by the wall structures 11 fitted to the flow channel 18. The non-ionized shield flows 13 are, for their part, brought to the filter structure 10 from the opposite side, to the under channels delimited by the wall structures 11 fitted to the flow channel 18 and the outer wall 12 of the flow channel 18. One other way would be to bring all the flows 13, 24 from the same side of the structure 10.

The side flows 13 are arranged in such a way that a middle flow 24 forms the narrow and flattened part in the middle of the channel 18. According to one embodiment, the flows 13, 24 can be of the same magnitude (the same mass flow) in the same-sized sub-channels. However, one measure of the quality of the device 10 can be the narrowness (the narrower the better) of the flow 24 in the middle, relative to the total flow. The height of the side channels can be altered with the mass flows, in such a way that the flow velocities in the different channels are more or less the same. In that case, turbulence and spreading of the middle flow 24 will not take place when the flows 13, 24 combine. The use of single-size channels can be an optimum, in which the same mass flow produces the same velocities in all the single-size channels. Channels of different sizes are not, however, excluded, as in the practice device the large side-flow channels can, in some cases, be a significant advantage. The ratio of the flow quantities of the middle channel and the side channels can be 1:2, or even 1:200. In other words, 200 litres per minute would flow from the side channels, while 1 litre per minute would flow from the middle, but in that case, the dimensions should, of course, be quite large.

It must be understood that the above description and the related figures are only intended to illustrate the present invention. The invention is thus in no way restricted to only the embodiments disclosed or stated in the Claims, but many different variations and adaptations of the invention, which are possible within the scope on the inventive idea defined in the accompanying Claims, will be obvious to one skilled in the art.

## Claims

1. Method for chemical analysis, in which
- a gas flow is ionized in order to form an ionized gas flow (24', 24) that is brought to a flow channel (18),
- the ionized gas flow (24) is led to a filtering area (28) fitted to the flow channel (18),
- the ionized gas flow (24) is filtered using the DMS/FAIMS method, in order to remove at least some of the ions (25, 105) from the ionized gas flow (24), a mainly non-ionized gas flow (13), which is on at least one side of the ionized gas flow (24), is led to the filtering area (28) together with the ionized gas flow (24),
**characterized in that**
- part of the ionized gas flow (24') is neutralized within the flow channel (18) in order to form said mainly non-ionized gas flow (13),
- wherein said mainly non-ionized gas flow (13) is parallel.

2. Method according to Claim 1, **characterized in that** the ionized gas flow (24) is led to the filtering area (28) between the mainly non-ionized gas flow (13).

3. Method according to Claim 1 or 2, **characterized in that** the mainly non-ionized gas flow (13) and the ionized gas flow (24) are combined with each other before being led to the filtering area (28).

4. Method according to any of Claims 1 - 3, **characterized in that** the ionized gas flow (24) is flattened by the mainly non-ionized gas flow (13) when they are led to the filtering area (28) .

5. Method according to any of Claims 1 - 4, **characterized in that** at least part of the gas flow (13, 24) is brought from the sides into the filtering structure (10), when it is in the operating attitude.

6. Structure for chemical analysis, which includes a flow-channel arrangement (18) for an ionized gas flow (24), which is arranged to be filtered using the DMS/FAIMS method in a planar filtering area (28) fitted to the flow channel (18), wherein the structure includes means for creating a mainly non-ionized gas flow (13) on at least one side of the ionized gas flow (24) which means include a structure (11) dividing the flow channel (18) into parts, in the middle of which can be arranged the ionized gas flow (24), with the mainly non-ionized gas flowing (13) on both sides **characterized in that** said structure (11) dividing the flow channel (18) into parts includes electrode means (38) arranged to neutralize part of the ionized gas flow (24') brought to the flow channel (18) in order to create the mainly non-ionized gas flow (13).

7. Structure according to Claim 6, **characterized in that** a gap (19) is arranged to remain between the structure (11) dividing the flow channel (18) into parts and the filtering area (28).

8. Structure according to Claim 6 or 7, **characterized in that** the filtering area (28) includes a structure (15) for flattening the ionized gas flow (24) by the mainly non-ionized gas flow (13).

9. Structure according to any of Claims 6 - 8, **characterized in that** at least part of the gas flows (13, 24, 24') is arranged to be brought from the sides into the filter structure (10) when it is in the operating attitude.

## Patentansprüche

1. Chemisches Analyseverfahren, bei dem
- ein Gasstrom ionisiert wird, um einen ionisierten Gasstrom (24', 24) zu bilden, der zu einem Strömungskanal (18) geleitet wird,
- der ionisierte Gasstrom (24) zu einem in dem Strömungskanal (18) angeordneten Filterbereich (28) geleitet wird,
- der ionisierte Gasstrom (24) unter Verwendung des DMS/FAIMS-Verfahrens gefiltert wird, um zumindest einige der Ionen (25, 105) aus dem ionisierten Gasstrom (24) zu entfernen, ein hauptsächlich nichtionisierter Gasstrom (13), der sich zumindest auf einer Seite des ionisierten Gasstroms (24) befindet, zum Filterbereich (28) zusammen mit dem ionisierten Gasstrom (24) geleitet wird,
**dadurch gekennzeichnet, dass**
- ein Teil des ionisierten Gasstroms (24') innerhalb des Strömungskanals (18) neutralisiert wird, um den hauptsächlich nichtionisierten Gasstrom (13) zu bilden,
- wobei der hauptsächlich nichtionisierte Gasstrom (13) parallel ist.

2. Verfahren nach Anspruch 1, **dadurch gekennzeichnet, dass** der ionisierte Gasstrom (24) zwischen dem hauptsächlich nichtionisierten Gasstrom (13) zum Filterbereich (28) geleitet wird.

3. Verfahren nach Anspruch 1 oder 2, **dadurch gekennzeichnet, dass** der hauptsächlich nichtionisierte Gasstrom (13) und der ionisierte Gasstrom (24) miteinander kombiniert werden, bevor sie zum Filterbereich (28) geleitet werden.

4. Verfahren nach einem der Ansprüche 1 - 3, **dadurch gekennzeichnet, dass** der ionisierte Gasstrom (24) durch den hauptsächlich nichtionisierten Gasstrom (13) abgeflacht wird, wenn sie zu dem Filterbereich (28) geleitet werden.

5. Verfahren nach einem der Ansprüche 1 - 4, **dadurch gekennzeichnet, dass** zumindest ein Teil des Gasstroms (13, 24) von den Seiten in die Filterstruktur (10) eingebracht wird, wenn sie sich in der Betriebslage befindet.

6. Struktur für die chemische Analyse, die eine Strömungskanalanordnung (18) für einen ionisierten Gasstrom (24) beinhaltet, der nach dem DMS/FAIMS-Verfahren in einem ebenen, im Strömungskanal (18) angeordneten Filterbereich (28) zu filtern ist, wobei die Struktur Mittel zum Erzeugen eines hauptsächlich nichtionisierten Gasstroms (13) auf zumindest einer Seite des ionisierten Gasstroms (24) beinhaltet, die ihrerseits eine Struktur (11) beinhalten, die den Strömungskanal (18) in Teile unterteilt, in deren Mitte der ionisierte Gasstrom (24) mit dem auf beiden Seiten hauptsächlich nichtionisierten Gasstrom (13) angeordnet werden kann, **dadurch gekennzeichnet, dass** die Struktur (11), die den Strömungskanal (18) in Teile unterteilt, Elektrodenmittel (38) beinhaltet, die angeordnet sind, um einen Teil des in den Strömungskanal (18) eingebrachten ionisierten Gasstroms (24') zu neutralisieren, um den hauptsächlich nichtionisierten Gasstrom (13) zu erzeugen.

7. Struktur nach Anspruch 6, **dadurch gekennzeichnet, dass** ein Spalt (19) zwischen der den Strömungskanal (18) in Teile unterteilenden Struktur (11) und dem Filterbereich (28) bleibend angeordnet ist.

8. Struktur nach Anspruch 6 oder 7, **dadurch gekennzeichnet, dass** der Filterbereich (28) eine Struktur (15) zum Abflachen des ionisierten Gasstroms (24) durch den hauptsächlich nichtionisierten Gasstrom (13) beinhaltet.

9. Struktur nach einem der Ansprüche 6 - 8, **dadurch gekennzeichnet, dass** zumindest ein Teil des Gasstroms (13, 24, 24') angeordnet ist, um von den Seiten in die Filterstruktur (10) eingebracht zu werden, wenn sie sich in der Betriebslage befindet.

## Revendications

1. Procédé d'analyse chimique, dans lequel
- un flux de gaz est ionisé afin de former un flux de gaz ionisé (24', 24) qui est transporté dans un canal d'écoulement (18),
- le flux de gaz ionisé (24) est amené dans une zone de filtrage (28) adaptée au canal d'écoulement (18),
- le flux de gaz ionisé (24) est filtré à l'aide du procédé DMS/FAIMS afin de retirer au moins certains ions (25, 105) du flux de gaz ionisé (24) ; un flux de gaz principalement non ionisé (13), qui se trouve au moins sur un côté du flux de gaz ionisé (24), est amené dans la zone de filtrage (28) avec le flux de gaz ionisé (24),
**caractérisé en ce que**
- une partie du flux de gaz ionisé (24') est neutralisée dans le canal de flux (18) afin de former ledit flux de gaz principalement non ionisé (13),
- ledit flux de gaz principalement non ionisé (13) est parallèle.

2. Procédé conformément à la revendication 1, **caractérisé en ce que** le flux de gaz ionisé (24) est amené dans la zone de filtrage (28) à l'intérieur du flux de gaz principalement non ionisé (13).

3. Procédé conformément à la revendication 1 ou 2, **caractérisé en ce que** le flux de gaz principalement non ionisé (13) et le flux de gaz ionisé (24) sont combiné avant d'être amenés dans la zone de filtrage (28).

4. Procédé conformément à l'une quelconque des revendications 1 à 3, **caractérisé en ce que** le flux de gaz ionisé (24) est aplati par le flux de gaz principalement non ionisé (13) lorsqu'ils sont amenés dans la zone de filtrage (28).

5. Procédé conformément à l'une quelconque des revendications 1 à 4, **caractérisé en ce qu'**au moins une partie du flux de gaz (13, 24) est amenée depuis les côtés dans la structure de filtrage (10), lorsqu'elle est en position de fonctionnement.

6. Structure d'analyse chimique qui inclut une installation de canal d'écoulement (18) pour un flux de gaz ionisé (24), qui est présenté pour être filtré selon le procédé DMS/FAIMS dans une zone de filtrage planaire (28) adaptée au canal d'écoulement (18), où la structure inclut des moyens pour la création d'un flux de gaz principalement non ionisé (13) sur au moins un côté du flux de gaz ionisé (24), lesdits moyens incluant une structure (11) divisant le canal d'écoulement (18) en plusieurs parties, au milieu duquel peut être placé le flux de gaz ionisé (24), le gaz principalement non ionisé s'écoulant (13) des deux côtés, **caractérisée en ce que** ladite structure (11) divisant le canal d'écoulement (18) en plusieurs parties inclut des moyens à électrode (38) disposés de sorte à neutraliser une partie du flux de gaz ionisé (24') amené dans le canal d'écoulement (18) afin de créer le flux de gaz principalement non ionisé (13).

7. Structure conformément à la revendication 6, **caractérisée en ce qu'**un espace (19) est mis en place entre la structure (11) divisant le canal d'écoulement (18) en plusieurs parties et la zone de filtrage (28).

8. Structure conformément à la revendication 6 ou 7, **caractérisée en ce que** la zone de filtrage (28) inclut une structure (15) pour que le flux de gaz ionisé (24) soit aplati par le flux de gaz principalement non ionisé (13).

9. Structure conformément à l'une quelconque des revendications 6 à 8, **caractérisée en ce qu'**au moins une partie des flux de gaz (13, 24, 24') soit disposée de sortie à être amenée depuis les côtés dans la structure de filtrage (10) lorsqu'elle est en position de fonctionnement.
